# EUROPÄISCHE PATENTSCHRIFT

(11) **EP 1 632 512 B1**
(45) Veröffentlichungstag und Bekanntmachung des Hinweises auf die Patenterteilung: **24.09.2008**
(21) Anmeldenummer: 05018224.5
(22) Anmeldetag: 23.08.2005
(51) Int. Cl.: C08G 18/44, C08G 18/10, C08G 64/30

(54) **Metallacetylacetonate als Umesterungskatalysatoren**
Metal acetylacetonates as transesterification catalysts
Acétylacétonates de métal comme catalyseurs de transestérification

(30) Priorität: 04.09.2004 DE 102004042843
(43) Veröffentlichungstag der Anmeldung: 08.03.2006
(73) Patentinhaber: Bayer MaterialScience AG, 51368 Leverkusen (DE)
(72) Erfinder: Hofacker, Steffen, Dr., 51519 Odenthal (DE)

(56) Entgegenhaltungen:
- EP-A- 0 684 285
- EP-A- 1 312 632
- EP-A- 1 477 508
- EP-A- 1 520 869
- WO-A-20/06002787
- GB-A- 1 113 156
- US-B1- 6 350 895
- DATABASE CA [Online] CHEMICAL ABSTRACTS SERVICE, COLUMBUS, OHIO, US; 3. September 1994 (1994-09-03), HAYASHI, MASANARI ET AL: "Preparation of aromatic carbonate esters" XP002356008 gefunden im STN Database accession no. 1994:508201 -& JP 05 331108 A (MITSUBISHI GAS CHEMICAL CO., JAPAN) 14. Dezember 1993 (1993-12-14)
- DATABASE CA [Online] CHEMICAL ABSTRACTS SERVICE, COLUMBUS, OHIO, US; 1. Februar 1997 (1997-02-01), IGNATOV, VLADIMIR N. ET AL: "Reactive blending of commercial PET and PC with freshly added catalysts" XP002356009 gefunden im STN Database accession no. 1997:73398 & POLYMER , 37(26), 5883-5887 CODEN: POLMAG; ISSN: 0032-3861, 1996,

## Beschreibung

Die vorliegende Erfindung betrifft ein Verfahren zur katalysierten Herstellung von Oligocarbonatpolyolen mit einem zahlenmittleren Molekulargewicht von 500 bis 5000 g/mol durch Umesterung von organischen Carbonaten mit aliphatischen Polyolen, bei dem als Katalysator Metallacetylacetonate und als aliphatische Polyole nur aliphatische, verzweigte oder unverzweigte, ausschließlich primäre Polyole mit einer OH-Funktionalität von ≥ 2 eingesetzt werden.

Oligocarbonatpolyole sind wichtige Vorprodukte, beispielsweise bei der Herstellung von Kunststoffen, Lacken und Klebstoffen. Sie werden z.B. mit Isocyanaten, Epoxiden, (cyclischen) Estern, Säuren oder Säureanhydriden umgesetzt (DE-A 1 955 902). Sie können prinzipiell aus aliphatischen Polyolen durch Umsetzung mit Phosgen (z.B. DE-A 1 595 446), bis-Chlorkohlensäureestern (z.B. DE-A 857948), Diarylcarbonaten (z.B. DE-A 101 255 57), cyclischen Carbonaten (z.B. DE-A 2 523 352) oder Dialkylcarbonaten (z.B. WO 2003/002630) hergestellt werden.

Es ist bekannt, dass bei Umsetzung von Arylcarbonaten wie Diphenylcarbonat mit aliphatischen Polyolen wie 1,6-Hexandiol ein hinreichender Reaktionsumsatz allein durch Entfernung der freiwerdenden alkoholischen Verbindung (z.B. Phenol) im Zuge der Gleichgewichtsverlagerung der Reaktion erreicht werden kann (z.B. EP-A 0 533 275).

Kommen jedoch Alkylcarbonate (z.B. Dimethylcarbonat) zum Einsatz, so werden häufig Umesterungskatalysatoren eingesetzt, z.B. Alkali- oder Erdalkali-Metalle sowie deren Oxide, Alkoxide, Carbonate, Borate oder Salze organischer Säuren (z.B. WO 2003/002630).

Darüber hinaus werden bevorzugt Zinn oder Zinn-organische Verbindungen wie Bis(tributylzinn)oxid, Dibutylzinnlaurat oder aber auch Dibutylzinnoxid (DE-A 2 523 352) sowie Verbindungen des Titans wie Titantetrabutylat, Titantetraisopropylat oder Titandioxid als Umesterungskatalysatoren verwendet (z.B. EP-B 0 343 572, WO 2003/002630).

Die aus dem Stand der Technik bekannten Umesterungskatalysatoren zur Herstellung von aliphatischen Oligocarbonatpolyolen durch Umsetzung von Alkylcarbonaten mit aliphatischen Polyolen weisen aber einige Nachteile auf.

In jüngster Zeit wurden Zinn-organische Verbindungen als potentielle Cancerogene beim Menschen erkannt. Sie sind somit unerwünschte Bestandteile, die auch in Folgeprodukten der Oligocarbonatpolyole verbleiben, sofern die bisher bevorzugten Verbindungen wie Bis(tributylzinn)oxid, Dibutylzinnoxid oder Dibutylzinnlaurat als Katalysatoren zum Einsatz kommen.

Bei Verwendung von starken Basen wie Alkali- oder Erdalkali-Metallen oder deren Alkoxiden ist es notwendig, nach erfolgter Oligomerisierung die Produkte in einem zusätzlichen Prozessschritt zu neutralisieren. Werden hingegen Ti-Verbindungen als Katalysatoren verwendet, so kann es bei Lagerung des resultierenden Produktes zu unerwünschten Verfärbungen (Gelbfärbung) kommen, was u.a. durch die Anwesenheit von Ti(III)-Verbindungen neben Ti(IV)-Verbindungen und/oder durch die Komplexbildungsneigung des Titans hervorgerufen wird.

Neben dieser unerwünschten Verfärbungseigenschaft weisen Titan-haltige Katalysatoren bei der weiteren Umsetzung der hydroxylterminierten Oligocarbonate als Polyurethanrohstoff eine hohe Aktivität gegenüber Isocyanatgruppen-haltigen Verbindungen auf. Besonders ausgeprägt ist diese Eigenschaft bei Umsetzung der Titan katalysierten Oligocarbonatpolyole mit aromatischen (Poly)Isocyanaten bei erhöhter Temperatur, wie dies beispielsweise bei der Herstellung von Gießelastomeren oder von thermoplastischen Polyurethanen (TPU) der Fall ist. Dieser Nachteil kann soweit führen, dass aufgrund des Einsatzes von Titan-haltigen Oligocarbonatpolyolen die Topfzeit bzw. Reaktionszeit des Reaktionsgemisches derart verkürzt wird, dass eine Verwendung solcher Oligocarbonatpolyole für diese Anwendungsgebiete nicht mehr möglich ist. Zur Vermeidung dieses Nachteils wird der im Produkt verbleibende Umesterungskatalysator nach abgeschlossener Synthese in mindestens einem zusätzlichen Produktionsschritt weitestgehend inaktiviert.

EP-B 1 091 993 lehrt die Inaktivierung durch Zusatz von Phosphorsäure, während US-A 4 891 421 eine Inaktivierung auch durch Hydrolyse der Titanverbindungen vorschlägt, wobei eine entsprechende Menge Wasser dem Produkt zugesetzt und nach erfolgter Desaktivierung destillativ wieder aus dem Produkt entfernt wird.

Weiterhin ist es mit den bisher verwendeten Katalysatoren nicht möglich gewesen, die Reaktionstemperatur, die üblicherweise zwischen 150°C und 230°C liegt, zu senken, um die Bildung von Nebenprodukten wie Ethern oder Vinylgruppen, die bei erhöhter Temperatur entstehen können, weitgehend zu vermeiden. Diese unerwünschten Endgruppen führen als Kettenabbrecher für nachfolgende Polymerisationsreaktionen, z.B. im Falle der Polyurethanreaktion mit mehrfachfunktionellen (Poly)Isocyanaten, zu einer Erniedrigung der Netzwerkdichte und damit zu schlechteren Produkteigenschaften (z.B. Lösemittel- oder Säurebeständigkeit).

Darüber hinaus weisen Oligocarbonatpolyole, die mit Hilfe der aus dem Stand der Technik bekannten Katalysatoren hergestellt wurden, hohe Gehalte an Ethergruppen (z.B. Methyl-, Hexylether etc.) auf. Diese Ethergruppen in den Oligocarbonatpolyolen führen jedoch dazu, dass z.B. die Heißluftbeständigkeit von Gießelastomeren auf Basis solcher Oligocarbonatpolyole unzureichend ist, da Etherbindungen im Material unter diesen Bedingungen gespalten werden und so zu einem Versagen des Materials führen.

In der nicht vorveröffentlichten deutschen Patentanmeldung Nr. 10321149.7 werden Acetylacetonate des Ytterbiums als wirksame Katalysatoren für die Umesterung zur Herstellung aliphatischer Oligocarbonatpolyole beschrieben.

In der nicht vorveröffentlichten deutschen Patentanmeldung Nr. 102004031600.6 (entspr. WO2006EP002787) wird ebenfalls eine solche Umesterung zur Herstellung aliphatischer Oligocarbonatpolyole beschrieben, jedoch werden als aliphatische Polyole aliphatische, verzweigte oder unverzweigte Polyole mit einer OH-Funktionalität von ≥ 2 eingesetzt, die nicht, ausschließlich primäre Polyole sind.

Aufgabe der vorliegenden Erfindung war es nun, weitere geeignete Katalysatoren für die Umesterungsreaktion von organischen Carbonaten mit aliphatischen Polyolen zur Herstellung von aliphatischen Oligocarbonatpolyole zu finden.

Es wurde nun gefunden, dass Acetylacetonatverbindungen der Metalle Yttrium, Praseodym, Neodym, Samarium, Gadolinium, Terbium, Dysprosium, Holmium, Erbium, Thulium und/oder Lutetium, bevorzugt Yttrium, Samarium, Terbium, Dysprosium, Holmium und/oder Erbium, solche Katalysatoren sind.

Gegenstand der vorliegenden Erfindung ist daher ein Verfahren zur katalysierten Herstellung von Oligocarbonatpolyolen mit einem zahlenmittleren Molekulargewicht von 500 bis 5000 g/mol aus organischen Carbonaten und aliphatischen Polyolen, bei dem als Katalysator Metallacetylacetonate basierend auf den Metallen Yttrium, Praseodym, Neodym, Samarium, Gadolinium, Terbium, Dysprosium, Holmium, Erbium, Thulium und/oder Lutetium, bevorzugt Yttrium, Samarium, Terbium, Dysprosium, Holmium und/oder Erbium, eingesetzt werden .

Bevorzugt liegen die Metalle in den Acetylacetonatverbindungen in der Oxidationsstufe + III vor.

Ganz besonders bevorzugt ist Yttrium(III)acetylacetonat als Katalysator.

Die erfindungsgemäß verwendeten Acetylacetonate können sowohl als Feststoff als auch in Lösung - z.B. gelöst in einem der Edukte - in das Verfahren eingesetzt werden.

Ihre Konzentration beträgt dabei 0,01 ppm bis 10000 ppm, bevorzugt 0,1 ppm bis 5000 ppm besonders bevorzugt 0,1 ppm bis 1000 ppm, bezogen auf die Gesamtmasse der eingesetzten Edukte.

Im erfindungsgemäßen Verfahren kann sowohl ein einzelnes Metallacetylacetonat als auch eine Mischung mehrerer Metallacetylacetonate als Katalysator eingesetzt werden.

Die Reaktionstemperatur bei der Umesterungsreaktion beträgt typischerweise 40°C bis 250°C, bevorzugt 60°C bis 230°C, besonders bevorzugt 80°C bis 210°C.

Die Umesterungsreaktion kann sowohl unter Atmosphärendruck als auch unter vermindertem oder erhöhtem Druck von 10⁻³ bis 10³ bar durchgeführt werden.

Die dabei gewählten Einsatzverhältnisse von organischem Carbonat zu aliphatischen Polyolen bestimmt sich dabei nach dem gewünschten zu erreichenden Molekulargewicht des Carbonatpolyols von 500 bis 5000 g/mol.

Als organische Carbonate können z.B. Aryl-, Alkyl- oder Alkylencarbonate, die durch ihre einfache Herstellbarkeit und gute Verfügbarkeit bekannt sind, verwendet werden. Als Beispiele seien genannt: Diphenylcarbonat (DPC), Dimethylcarbonat (DMC), Diethylcarbonat (DEC), Ethylencarbonat, etc.

Bevorzugt werden Diphenylcarbonat, Dimethylcarbonat oder Diethylcarbonat eingesetzt. Ganz besonders bevorzugt werden Diphenylcarbonat oder Dimethylcarbonat verwendet.

Als Reaktionspartner der organischen Carbonate können primäre aliphatische Alkohole mit 2 bis 100 C-Atomen ( verzweigt, unverzweigt, gesättigt oder ungesättigt) mit einer OH-Funktionalität ≥ 2 eingesetzt werden.

Bevorzugt ist die Hydroxyfunktionalität dieser Polyole von höchstens 10, besonders bevorzugt von höchstens 6, ganz besonders bevorzugt von höchstens 3.

Als Beispiele seien genannt: Ethylenglykol, 1,3-Propylenglykol, 1,4-Butandiol, 1,5-Pentandiol, 1,6-Hexandiol, 2-Ethyl-Hexandiol, 3-Methyl-1,5-Pentandiol, Trimethylolpropan, Pentaerythrit, Dimerdiol, Diethylenglykol.

Ebenso können erfindungsgemäß primäre Polyole eingesetzt werden, die aus einer Ringöffnungsreaktion eines Lactons oder Epoxids mit einem aliphatischen Alkohol (verzweigt, unverzweigt, gesättigt oder ungesättigt) mit einer OH-Funktionalität ≥ 2 erhältlich sind, z.B. das Addukt aus ε-Caprolacton und 1,6 Hexandiol oder ε-Caprolacton und Trimethylolpropan sowie deren Mischungen.

Schließlich können auch Mischungen verschiedener oben erwähnter Polyole als Edukte eingesetzt werden.

Eingesetzt werden aliphatische, verzweigte oder unverzweigte, primäre Polyole mit einer OH-Funktionalität ≥ 2.

Bei Verwendung der vorstehend beschriebenen Acetylacetonate kann auf eine abschließende Desaktivierung des Umesterungskatalysators durch z.B. Zusatz von Maskierungsmitteln wie z.B. Phosphorsäure, Dibutylphosphat, Oxalsäure, etc. oder Fällungsreagienzien, wie z.B. Wasser verzichtet werden. Die resultierenden metallacetylacetonathaltigen Oligocarbonatpolyole sind somit ohne weitere Behandlung als Rohstoffe z.B. für die Polyurethanherstellung geeignet.

Die nach dem vorstehend beschriebenen Verfahren erhältlichen Oligocarbonatpolyole weisen einen niedrigeren Gehalt an Ethergruppen auf als Oligocarbonatdiole, die mit Katalysatoren des Standes der Technik hergestellt wurden. Dies hat unmittelbaren Einfluss auf die Eigenschaften der aus ihnen hergestellten Folgeprodukte wie NCO-terminierte Prepolymere. Diese zeigen eine bessere Lagerstabilität als die mit den Oligocarbonatdiolen des Standes der Technik hergestellten Prepolymere. Außerdem weisen aus diesen Oligocarbonatdiolen hergestellte Gießelastomere eine höhere Heißluftbeständigkeit auf.

Die Katalysatoren können bei weiteren Umsetzungen im Produkt verbleiben, da sie die Reaktion der Polyole mit Polyisocyanaten nicht negativ beeinflussen.

### Beispiele

Die in den nachfolgenden Beispielen beschriebenen NCO-Gehalte wurde in einer Dreifachbestimmung gemäß DIN EN ISO 11909 ermittelt. Die Viskositäten wurden nach DIN EN ISO 3219 mit Hilfe des Gerätes Roto Visco® der Fa. Haake, Karlsruhe, Deutschland bestimmt.

Die in den Beispielen 2 und 3 aufgeführten Gehalte an Verbindungen, die abweichend von der theoretischen hydroxylfunktionellen Zielverbindung endständig Methylethergruppen tragen, wurden über ¹H-NMR-Analytik und die integrale Auswertung der entsprechenden Signale ermittelt. Die angegebenen Gehalte können als Anteile der aufgeführten Verbindung bezogen auf 1 mol der theoretischen Zielverbindung mit zwei endständigen Hydroxylgruppen angesehen werden.

### Beispiel 1

In einem 20 ml Rollrandglasgefäß wurden Dimethylcarbonat (3,06 g) und 1-Hexanol (6,94 g) im Molverhältnis 1:2 zusammen mit je einer konstanten Menge (5,7·10⁻⁶ mol) eines Katalysators (siehe Tabelle 1) gemischt und mit einem Septum aus Naturkautschuk inkl. Gasauslass verschlossen. Lag der eingesetzte Katalysator bei Raumtemperatur im festen Aggregatszustand vor, so wurde dieser in einem der Edukte zunächst gelöst. Unter Rühren wurde das Reaktionsgemisch für sechs Stunden auf 80°C erhitzt. Nach Abkühlung auf Raumtemperatur erfolgte eine Analyse des Produktspektrums mittels Gaschromatographie, gegebenenfalls gekoppelt mit massenspektrometrischen Untersuchungen. Die Gehalte an Umsetzungsprodukten, nämlich an Methyl-Hexyl-Carbonat bzw. Dihexylcarbonat, welche als Maß für die Aktivität des verwendeten Umesterungskatalysators aufgefasst werden können, wurden durch integrale Auswertung der jeweiligen Gaschromatogramme quantifiziert. Die Ergebnisse dieser Aktivitätsuntersuchungen sind in Tabelle 1 aufgeführt.

**Tabelle 1 Eingesetzte Katalysatoren und Gehalte an Umsetzungsprodukten**

| Nr. | Katalysator | Gehalt an Methyl-Hexyl-Carbonat [Flächen-%] | Gehalt an Dihexylcarbonat [Flächen-%] | Summe der Gehalte [Flächen-%] |
|---|---|---|---|---|
| 1 | ohne Katalysator | 4,0 | 0,1 | 4,1 |
| 2 | Dibutylzinnoxid | 5,1 | 0,2 | 5,3 |
| 3 | Dibutylzinnlaurat | 3,4 | 0,1 | 3,5 |
| 4 | Bis (tributylzinn) oxid | 3,7 | 0,0 | 3,7 |
| 5 | Titantetraisopropylat | 1,9 | 0,0 | 1,9 |
| 6 | Magnesiumcarbonat | 2,1 | 0,1 | 2,2 |
| 7 | Scandium(III)acetylacetonat | 6,0 | 0,3 | 6,3 |
| 8 | Yttrium(III)acetylacetonat | 29,4 | 13,5 | 42,9 |
| 9 | Lanthan(III)acetylacetonat | 13,7 | 1,2 | 14,9 |
| 10 | Cer(III)acetylacetonat | 0,8 | 0,0 | 0,8 |
| 11 | Praseodym(III)acetylacetonat | 23,3 | 4,7 | 28,0 |
| 12 | Neodym(III)acetylacetonat | 19,5 | 2,9 | 22,4 |
| 13 | Samarium(III)acetylacetonat | 27,4 | 8,7 | 36,1 |
| 14 | Gadolinium(III)acetylacetonat | 25,9 | 6,4 | 32,3 |
| 15 | Terbium(III)acetylacetonat | 27,6 | 8,5 | 36,1 |
| 16 | Dysprosium(III)acetylacetonat | 27,5 | 7,9 | 35,4 |
| 17 | Holmium(III)acetylacetonat | 28,5 | 8,2 | 36,7 |
| 18 | Erbium(III)acetylacetonat | 28,3 | 9,0 | 37,3 |
| 19 | Thulium(III)acetylacetonat | 24,8 | 6,5 | 31,3 |
| 20 | Lutetium(III)acetylacetonat | 26,9 | 7,3 | 34,2 |

Wie aus den vorstehenden Versuchen deutlich wird, eignen sich die erfindungsgemäß einzusetzenden Metallacetylacetonate sehr gut als Umesterungskatalysatoren zur Herstellung von Oligocarbonatpolyolen. Die Versuche Nr. 7 und 10 zeigen ferner, dass sich nicht alle Übergangsmetallacetylacetonate zur Katalyse der Umesterung eignen.

### Beispiel 2

### Herstellung eines aliphatischen Oligocarbonatdiols mit Yttrium(III)acetylacetonat

In einem 5 1 Druckreaktor mit Destillationsaufsatz, Rührer und Vorlage wurden 1759 g 1,6-Hexandiol mit 0,02 g Yttrium(III)acetylacetonat vorgelegt. Es wurde ein Stickstoffdruck von 2 bar angelegt und auf 160°C erhitzt. Danach wurden innerhalb von 3 h 1245,5 g Dimethylcarbonat zudosiert, wobei der Druck gleichzeitig auf 3,9 bar anstieg. Danach wurde die Reaktionstemperatur auf 185°C erhöht und das Reaktionsgemisch 1h lang gerührt. Schließlich wurden innerhalb von 3 h weitere 1245,5 g Dimethylcarbonat zudosiert, wobei der Druck auf 7,5 bar anstieg. Nach erfolgter Zugabe wurde weitere 2 h nachgerührt wobei der Druck auf 8,2 bar anstieg. Während des gesamtes Umesterungsprozesses war der Übergang zur Destille und Vorlage immer geöffnet, so dass entstehendes Methanol als Gemisch mit Dimethylcarbonat abdestillieren konnte. Schließlich wurde das Reaktionsgemisch innerhalb von 15 Minuten auf Normaldruck entspannt, die Temperatur wurde auf 150°C gesenkt und es wurde für eine weitere Stunde bei dieser Temperatur weiter abdestilliert. Danach wurde zur Entfernung von überschüssigem Dimethylcarbonat und Methanol sowie zur Entkappung (Nutzbarmachung) der endständigen OH-Gruppen der Druck auf 10 mbar abgesenkt. Nach zwei Stunden wurde schließlich die Temperatur innerhalb von 1 h auf 180°C erhöht und für weitere 4 h gehalten. Das resultierende Oligocarbonatdiol hatte eine OH-Zahl von 5 mg KOH/g.

Der Reaktionsansatz wurde belüftet, mit 185 g 1,6-Hexandiol versetzt und unter Normaldruck für 6 h auf 180°C erhitzt. Anschließend wurde der Druck bei 180°C für 6 h auf 10 mbar abgesenkt.

Nach Belüftung und Abkühlung des Reaktionsansatzes auf Raumtemperatur, erhielt man ein farbloses, wachsartiges Oligocarbonatdiol mit folgenden Kennzahlen: Mₙ = 2000 g/mol; OH-Zahl = 56,5 mg KOH/g; Methylethergehalt: <0,1 mol-%; Viskosität: 2800 mPas bei 75°C

### Beispiel 3 (Vergleich)

### Herstellung eines aliphatischen Oligocarbonatdiols unter Verwendung eines aus dem Stand der Technik bekannten Katalysators

In einem 5 1 Druckreaktor mit Destillationsaufsatz, Rührer und Vorlage wurden 1759 g 1,6-Hexandiol mit 0,02 g Titantetraisopropylat vorgelegt. Es wurde ein Stickstoffdruck von 2 bar angelegt und auf 160°C erhitzt. Danach wurden innerhalb von 1h 622,75 g Dimethylcarbonat zudosiert, wobei der Druck gleichzeitig auf 3,9 bar anstieg. Danach wurde die Reaktionstemperatur auf 180°C erhöht und weitere 622,75 g Dimethylcarbonat wurden innerhalb 1h zugegeben. Schließlich wurden innerhalb von 2h weitere 1245,5 g Dimethylcarbonat bei 185°C zudosiert, wobei der Druck auf 7,5 bar anstieg. Nach erfolgter Zugabe wurde bei dieser Temperatur eine weitere Stunde gerührt. Während des gesamtes Umesterungsprozesses war der Übergang zur Destille und Vorlage immer geöffnet, so dass entstehendes Methanol im Gemisch mit Dimethylcarbonat abdestillieren konnte. Schließlich wurde das Reaktionsgemisch innerhalb von 15 Minuten auf Normaldruck entspannt, die Temperatur auf 160°C gesenkt und es wurde für eine weitere Stunde bei dieser Temperatur weiter abdestilliert. Danach wurde zur Entfernung von überschüssigem Methanol und Dimethylcarbonat sowie zur Entkappung (Nutzbarbachung) der endständigen OH-Gruppen der Druck auf 15 mbar abgesenkt. Nach weiteren 4 h Destillation bei diesen Bedingungen wurde der Reaktionsansatz belüftet. Das resultierende Oligocarbonatdiol hatte eine OH-Zahl von 116 mg KOH/g. Daraufhin wurde der Reaktionsansatz, mit 60 g Dimethylcarbonat versetzt und bei einem Druck von 2,6 bar für 6 h auf 185°C erhitzt.

Anschließend wurde der Druck bei 185°C für 8 h auf 15 mbar abgesenkt. Nach Belüftung und Konfektionierung des Reaktionsproduktes mit 0,04 g Dibutylphosphat als Katalysatordesaktivator sowie Abkühlung des Reaktionsansatzes auf Raumtemperatur erhielt man ein farbloses, wachsartiges Oligocarbonatdiol mit folgenden Kennzahlen Mₙ = 2000 g/mol; OH-Zahl = 56,5 mg KOH / g; Methylethergehalt: 3,8 mol-%; Viskosität: 2600 mPas bei 75°C

Der Ethergehalt des in Beispiel 2 erhaltenen Oligocarbonatdiols ist deutlich niedriger als der des in Beispiel 3 erhaltenen Oligocarbonatdiols. Dies hat unmittelbaren Einfluss auf die Heißluftbeständigkeit von aus diesen Polyolen hergestellten Gießelastomeren.

### Beispiel 4

### Verwendung des aliphatischen Oligocarbonatdiols aus Beispiel 2 als Rohstoff zur Herstellung eines Polyurethanprepolymeren

In einen 250 ml Dreihalskoben mit Rührer und Rückflusskühler wurden 50,24 g Diphenylmethan-4,4'-diisocyanat bei 80°C vorgelegt und 99,76 g auf 80°C erwärmtes aliphatisches Oligocarbonatdiol aus Beispiel 2 wurden langsam unter Stickstoffatmosphäre zugegeben (Äquivalentverhältnis Isocyanat zu Polyol = 1,00: 0,25). Nach beendeter Zugabe wurde 30 Minuten nachgerührt.

Man erhielt ein flüssiges, hochviskoses Polyurethanprepolymer mit folgenden Kenndaten: NCO-Gehalt: 8,50 Gew.-%; Viskosität: 6600 mPas @ 70°C.

Anschließend wurde das Prepolymere weitere 72 h bei 80°C gelagert und dann wurden die Viskosität und der NCO-Gehalt überprüft.

Nach Lagerung erhielt man ein flüssiges Produkt mit folgenden Kenndaten: NCO-Gehalt: 8,40 Gew.-%; Viskosität: 7000 mPas @ 70°C (entspricht einer Viskositätszunahme von 6,1 %);

### Beispiel 5 (Vergleich)

### Verwendung des aliphatischen Oligocarbonatdiols aus Beispiel 3 als Rohstoff zur Herstellung eines Polyurethanprepolymeren

In einen 250 ml Dreihalskoben mit Rührer und Rückflusskühler, wurden 50,24 g Diphenylmethan-4,4'-diisocyanat bei 80°C vorgelegt und 99,76 g auf 80°C erwärmtes aliphatisches Oligocarbonatdiol aus Beispiel 3 wurden langsam unter Stickstoffatmosphäre zugegeben (Äquivalentverhältnis Isocyanat zu Polyol = 1,00: 0,25). Nach beendeter Zugabe wurde 30 Minuten nachgerührt.

Man erhielt ein flüssiges, hochviskoses Polyurethanprepolymer mit folgenden Kenndaten: NCO-Gehalt: 8,5 Gew.-% ; Viskosität: 5700 mPas @ 70°C.

Anschließend wurde das Prepolymere weitere 72 h bei 80°C gelagert und dann wurden die Viskosität und der NCO-Gehalt überprüft. Nach Lagerung erhielt man ein festes (vergeltes) Produkt.

Wie aus dem Vergleich der Viskositäten der Beispiele 4 und 5 hervorgeht, steigt die Viskosität des Prepolymeren aus Beispiel 5 bei Lagerung so stark an, dass dieses in den Gelzustand übergeht, während die Zunahme der Viskosität in Beispiel 4 mit 6,4 % weit unterhalb der kritischen Marke von 20 % liegt.

Damit wird deutlich, dass aliphatische Oligocarbonatpolyole, welche unter Verwendung eines oder mehrerer erfindungsgemäßen Katalysatoren hergestellt wurden, eine deutlich geringere und somit vorteilhaftere Aktivität bezüglich der Umsetzung mit (Poly)Isocyanaten zu (Poly)Urethanen aufweisen als solche, die mit Hilfe von aus dem Stand der Technik bekannten Katalysatoren hergestellt wurden, obwohl diese zusätzlich "inaktiviert" wurden.

## Patentansprüche

1. Verfahren zur katalysierten Herstellung von Oligocarbonatpolyolen mit einem zahlenmittleren Molekulargewicht von 500 bis 5000 g/mol aus organischen Carbonaten und ausschließlich primären aliphatischen Polyolen, bei dem als Katalysator Metallacetylacetonate basierend auf Yttrium, Praseodym, Neodym, Samarium, Gadolinium, Terbium, Dysprosium, Holmium, Erbium, Thulium und/oder Lutetium und als Polyole nur aliphatische, verzweigte oder unverzweigte, ausschließlich primäre Polyole mit einer OH-Funktionalität von ≥ 2 eingesetzt werden.

2. Verfahren zur katalysierten Herstellung von Oligocarbonatpolyolen gemäß Anspruch 1, **dadurch gekennzeichnet, dass** ein Metallacetylacetonat auf Basis von Yttrium, Samarium, Terbium, Dysprosium, Holmium und/oder Erbium verwendet wird.

3. Verfahren zur katalysierten Herstellung von Oligocarbonatpolyolen gemäß Anspruch 1 oder 2, **dadurch gekennzeichnet, dass** als Katalysator Yttrium(III)acetylacetonat verwendet wird.

4. Verfahren zur katalysierten Herstellung von Oligocarbonatpolyolen gemäß einem der Ansprüche 1 bis 3, **dadurch gekennzeichnet, dass** die Verfahrenstemperatur 80 bis 210°C beträgt.

5. Verfahren zur katalysierten Herstellung von Oligocarbonatpolyolen gemäß einem der Ansprüche 1 bis 4, **dadurch gekennzeichnet, dass** als organisches Carbonat Diphenylcarbonat oder Dimethylcarbonat eingesetzt wird.

## Claims

1. Process for the catalysed preparation of oligo-carbonate polyols having a number-average molecular weight of from 500 to 5000 g/mol from organic carbonates and solely primary aliphatic polyols, in which there are used as catalyst metal acetylacetonates based on yttrium, praseodymium, neodymium, samarium, gadolinium, terbium, dysprosium, holmium, erbium, thulium and/or lutetium and there are used as polyols only aliphatic, branched or unbranched, solely primary polyols having an OH functionality of ≥ 2.

2. Process for the catalysed preparation of oligo-carbonate polyols according to claim 1, **characterised in that** a metal acetylacetonate based on yttrium, samarium, terbium, dysprosium, holmium and/or erbium is used.

3. Process for the catalysed preparation of oligo-carbonate polyols according to claim 1 or 2, **characterised in that** yttrium(III) acetylacetonate is used as catalyst.

4. Process for the catalysed preparation of oligo-carbonate polyols according to any one of claims 1 to 3, **characterised in that** the process temperature is from 80 to 210°C.

5. Process for the catalysed preparation of oligo-carbonate polyols according to any one of claims 1 to 4, **characterised in that** diphenyl carbonate or dimethyl carbonate is used as the organic carbonate.

## Revendications

1. Procédé de production catalysée de polyols d'oligocarbonates ayant une masse moléculaire moyenne en nombre de 500 à 5000 g/mol à partir de carbonates organiques et de polyols aliphatiques exclusivement primaires, dans lequel des acétylacétonates métalliques à base d'yttrium, praséodyme, néodyme, samarium, gadolinium, terbium, dysprosium, holmium, erbium, thulium et/ou lutécium sont utilisés comme catalyseur et comme polyols uniquement des polyols aliphatiques, ramifiés ou non ramifiés, exclusivement primaires, ayant une fonctionnalité OH ≥ 2.

2. Procédé de production catalysée de polyols d'oligocarbonates selon la revendication 1, **caractérisé en ce qu'**un acétylacétonate métallique à base d'yttrium, samarium, terbium, dysprosium, holmium et/ou erbium est utilisé.

3. Procédé de production catalysée de polyols d'oligocarbonates selon la revendication 1 ou la revendication 2, **caractérisé en ce que** de l'acétylacétonate d'yttrium (III) est utilisé comme catalyseur.

4. Procédé de production catalysée de polyols d'oligocarbonates selon l'une des revendications 1 à 3, **caractérisé en ce que** la température du procédé se situe dans la plage de 80 à 210 °C.

5. Procédé de production catalysée de polyols d'oligocarbonates selon l'une des revendications 1 à 4, **caractérisé en ce que** le carbonate organique utilisé est le carbonate de diphényle ou le carbonate de diméthyle.
